# EUROPEAN PATENT SPECIFICATION

(11) **EP 3 493 623 B1**
(45) Date of publication and mention of the grant of the patent: **18.05.2022**
(21) Application number: 17834371.1
(22) Date of filing: 26.07.2017
(51) Int. Cl.: H04W 72/04, H04L 5/00

(54) **TERMINAL AND WIRELESS COMMUNICATION METHOD**
ENDGERÄT UND DRAHTLOSKOMMUNIKATIONSVERFAHREN
TERMINAL ET PROCÉDÉ DE COMMUNICATION SANS FIL

(30) Priority: 29.07.2016 JP 2016150065
(43) Date of publication of application: 05.06.2019
(60) Divisional application: 21193775.0
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN); LI, Na, Beijing 100876 (CN); LI, Yong, Beijing 100876 (CN); WANG, Wenbo, Beijing 100876 (CN)
(74) Representative: Hoffmann Eitle
(86) International application number: PCT/JP2017/026950
(87) International publication number: WO 2018/021369

(56) References cited:
- WO-A1-2016/064049
- MEDIATEK INC: "Control channel design for latency reduction", 3GPP DRAFT; R1-165123-LATRED CONTROL V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 14 May 2016 (2016-05-14), XP051089839, Retrieved from the Internet: URL:http://www.3gpp.org/ftp/tsg_ran/WG1_RL 1/TSGR1_85/Docs/ [retrieved on 2016-05-14]
- LENOVO: "Design of DL channels for shortened TTI", 3GPP DRAFT; R1-164649, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Nanjing, China; 20160523 - 20160527 13 May 2016 (2016-05-13), XP051096871, Retrieved from the Internet: URL:http://www.3gpp.org/ftp/tsg_ran/WG1_RL 1/TSGR1_85/Docs/ [retrieved on 2016-05-13]
- NOKIA ET AL: "On two-level DL control channel design for shorter TTI operation", 3GPP DRAFT; R1-165237 ON TWO-LEVEL DL CONTROL CHANNEL DESIGN FOR SHORTER TTI OPERATION, 3RD GENERATION PARTNERSHIP PROJECT (3GPP), MOBILE COMPETENCE CENTRE ; 650, ROUTE DES LUCIOLES ; F-06921 SOPHIA-A , vol. RAN WG1, no. Nanjing, China; 20160523 - 20160527 13 May 2016 (2016-05-13), XP051090186, Retrieved from the Internet: URL:http://www.3gpp.org/ftp/tsg_ran/WG1_RL 1/TSGR1_85/Docs/ [retrieved on 2016-05-13]
- "3rd Generation Partnership Project; Technical Specification Group Radio Access Network; Evolved Universal Terrestrial Radio Access (E-UTRA); Study on latency reduction techniques for LTE (Release 14)", 3GPP STANDARD; TECHNICAL REPORT; 3GPP TR 36.881, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.0.0, 13 July 2016 (2016-07-13), pages 1-99, XP051450161, [retrieved on 2016-07-13]
- NOKIA ET AL.: 'On two- level DL control channel design for shorter TTI operation' 3GPP TSG-RAN WG1#85 R1- 165237, [Online] 13 May 2016, XP051090186 Retrieved from the Internet: <URL:http://www.3gpp.org/ftp/ tsg_ran/WG1_RL1/TSGR1_1343/Docs/R1-165237.z ip>
- SAMSUNG: 'sPDCCH and sDCI design' 3GPP TSG-RAN WG1#85 RL-164793, [Online] 14 May 2016, XP051096324 Retrieved from the Internet: <URL:http:// www.3gpp.org/ftp/tsg_ran/WG1_RL1/TSGR1_904/ Docs/Rl-164793.zip>
- HUAWEI ET AL.: 'sPDCCH design for short TTI' 3GPP TSG-RAN WG1#85 RL-164059, [Online] 14 May 2016, XP051096625 Retrieved from the Internet: <URL:http://www.3gpp.org/ftp/tsg - ran/ WG1-RL1/TSGR1-183/Docs/Rl-164059.zip>

## Description

### Technical Field

The present invention relates to a terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower delays and so on (see non-patent literature 1). In addition, successor systems of LTE (referred to as, for example, "LTE-A (LTE-Advanced)," "FRA (Future Radio Access)," "4G," "5G," "5G+ (plus)," "NR (New RAT (New Radio Access Technology))," "LTE Rel. 14," "LTE Rel. 15 (or later versions)," and so on) are under study for the purpose of achieving further broadbandization and increased speed beyond LTE.

In existing LTE systems (for example, LTE Rel. 13 or earlier versions), downlink (DL) and/or uplink (UL) communication are carried out using transmission time intervals (TTIs) (also referred to as "subframes") of 1 ms. These 1-ms TTIs are the time unit for transmitting one channel-encoded data packet, and serve as the unit of processing in, for example, scheduling, link adaptation, retransmission control (HARQ-ACK (Hybrid Automatic Repeat reQuest-ACKnowledgement)) and so on.

Furthermore, in existing LTE systems, in a TTI for a certain carrier (CC (Component Carrier), cell, etc.), a time field for DL control channel (for example, PDCCH (Physical Downlink Control CHannel), and a time field for DL data channel (for example, PDSCH (Physical Downlink Shared CHannel), which is scheduled by downlink control information (DCI) that is transmitted in the DL control channel, are provided. In a time field for DL control channel, the DL control channel is arranged throughout the system band.

Furthermore, in existing LTE systems, in a TTI for a given carrier, a UL control channel (for example, PUSCH (Physical Uplink Control CHannel)) for communicating uplink control information (UCI) is arranged in fields at both ends of the system band, and a UL data channel (for example, PUSCH (Physical Uplink Shared CHannel)) is arranged in fields other than these edge fields.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010.

MEDIATEK INC: "Control channel design for latency reduction", 3GPP DRAFT; R1-165123, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, RAN WG1, Nanjing, China; 14 May 2016, relates to control channel design for latency reduction and describes that if in each short TTI, only a single DCI is sent to schedule a UE's downlink transmission, a simple rule can be defined so all the REs in the short TTI not taken by the DCI or reference signals are used for downlink data. When two or DCIs are sent in a short TTI, which can be for uplink grant(s) and downlink assignment(s) for one or more UEs, then a UE won't know whether there is a DCI present other than the one which schedules its downlink transmission, and it will be beneficial to inform the UE the resources taken by other DCIs so the REs not taken by DCIs, reference signals or other UEs' data transmission can be used for that UE's data transmission.

### Summary of Invention

### Technical Problem

In future radio communication systems (for example, LTE Rel. 14 or 15, 5G, NR, etc.), it is desirable to realize low latency (also referred to as "latency reduction," etc.) and/or highly efficient control. However, when a clear distinction is drawn between the time field for DL control channel (for example, PDCCH) and the time field for DL data channel (for example, PDSCH) within a TTI, as in existing LTE systems, unoccupied resources may be produced in the time field for DL control channel, there is a possibility that radio resources cannot be used effectively.

The present invention has been made in view of the above, and it is therefore an object of the present invention to provide a terminal and a radio communication method, which allow communication using a DL data channel multiplexing method that is suitable for future radio communication systems. Solution to Problem

The object of the invention is achieved by the subject-matter of the independent claims. Advantageous embodiments are defined in the dependent claims. Further examples are provided for facilitating the understanding of the invention. According to one aspect, a user terminal has a receiving section that receives downlink (DL) control information (DCI) that is mapped to a candidate resource for a downlink control channel and a control section that controls receipt of a downlink (DL) data channel and/or transmission of an uplink (UL) data channel based on the DCI, and the control section controls the receipt of the DL data channel based on a candidate resource where the DCI is not detected.

### Advantageous Effects of Invention

According to the present invention, it is possible to communicate using a DL data channel multiplexing method that is suitable for future radio communication systems.

### Brief Description of Drawings

FIG. 1 is a diagram to show an example of mapping of sPDSCHs according to a first aspect of the present invention;
FIG. 2 is a diagram to show an example of first scheduling control according to a second aspect of the present invention; FIG. 3 is a diagram to show an example of second scheduling control according to the second aspect;
FIG. 4 is a diagram to show an example of first scheduling control according to a third aspect of the present invention;
FIG. 5 is a diagram to show another example of first scheduling control according to the third aspect;
FIG. 6 is a diagram to show an example of second scheduling control according to the third aspect;
FIG. 7 is a diagram to show another example of second scheduling control according to the third aspect;
FIG. 8 is a diagram to show an example of first judgement regarding mapping of sPDSCHs according to a fourth aspect of the present invention;
FIG. 9 is a diagram to show an example of second judgment regarding mapping of sPDSCHs according to the fourth aspect;
FIG. 10 is a diagram to show an example of a schematic structure of a radio communication system according to the present embodiment;
FIG. 11 is a diagram to show an example of an overall structure of a radio base station according to the present embodiment;
FIG. 12 is a diagram to show an example of a functional structure of a radio base station according to the present embodiment;
FIG. 13 is a diagram to show an example of an overall structure of a user terminal according to the present embodiment;
FIG. 14 is a diagram to show an example of a functional structure of a user terminal according to the present embodiment; and
FIG. 15 is a diagram to show an example hardware structure of a radio base station and a user terminal according to the present embodiment.

### Description of Embodiments

In existing LTE systems (for example, LTE Rel. 13 or earlier versions), in a predetermined number of symbols (up to three symbols) at the head of a TTI of 1 ms, a PDCCH is allocated over the entire frequency band (system band) of a certain carrier (CC, cell, etc.).

In this TTI of 1ms, in symbols following the symbols in which the PDCCH is placed, a PDSCH and/or a PUSCH are placed in frequency resources (also referred to as, for example, "resource blocks (RBs)," physical resource blocks (PRBs)," etc.) that are allocated by DCI transmitted via the PDCCH, a resource block group (RBG) that is comprised of a predetermined number of RBs, and so on. As described above, in existing LTE systems, a time field for PDCCH and a time field for PDSCH are provided within a TTI of 1 ms, and the PDCCH and the PDSCH are completely time-division-multiplexed (TDM (Time Division Multiplexing)).

Meanwhile, envisaging future radio communication systems (for example, LTE Rel. 14 or 15, 5G, NR etc.), radio frame configurations for realizing low latency (also referred to as "latency reduction," etc.) and high-efficiency control are under study. For example, for future radio communication systems, research is underway to support TTIs (for example TTIs that are shorter than 1 ms) having different time durations (TTI durations) than the 1-ms TTIs of existing LTE systems.

In a TTI that is shorter than 1 ms (hereinafter referred to as a "short TTI"), it is likely that the number of resource elements where a DL data channel can be allocated is smaller than in a TTI of 1 ms (hereinafter referred to as a "normal TTI"), so that how to reduce the overhead is a critical issue.

However, assuming that short TTIs are used, if, as in existing LTE systems, an area to place PDCCH is provided throughout the system band in a predetermined number of symbols at the head of a TTI, unoccupied resources may be produced in this area for placing PDCCH, and, as a result of this, the overhead cannot be reduced sufficiently. Problems of this nature can also arise when normal TTIs are used.

Now, in existing LTE systems, downlink control information (DCI) for a user terminal is placed in a candidate resource (also referred to as "PDCCH candidate" and/or the like) within a search space that is configured for the user terminal. The user terminal performs blind detection for a plurality of candidate resources in the search space, and detects the DCI for the user terminal. As for the method of determining which candidate resource is detected among the candidate resources where blind decoding is executed, the method of masking (scrambling) CRC (Cyclic Redundancy Check) bits with user terminal-specific IDs or with system-common IDs (also referred to as "RNTIs (Radio Network Temporary Identifiers)," for example) is used. When the user terminal performs blind decoding, the user terminal can detect DCI only if the CRC of the DCI is masked with the individual ID or the system-common ID that has been reported to the UE and there is no error with the decoding result.

Furthermore, in existing LTE systems, candidate resources where no DCI directed to a certain user terminal is mapped are either unoccupied or used for DCI for other user terminals.

So, the present inventors have come up with the idea of reducing the overhead of TTIs by allocating DL control channel candidates, where no downlink control information (DCI) is allocated, as part of DL data channels, instead of making these DL control channel candidates blank resources, and arrived at the present invention.

Now, the present embodiment will be described below in detail. In the present embodiment, a user terminal receives DCI that is mapped to candidate resources for a DL control channel, and controls receipt of a DL data channel and/or transmission of a UL data channel based on this DCI. The user terminal controls receipt of the DL data channel based on candidate resources where the DCI is not mapped. The DCI may be a DL assignment that schedules a DL data channel and/or a UL grant that schedules a UL data channel.

Note that although example cases will be described below with the present embodiment where a DL data channel (hereinafter referred to as "sPDSCH") and a DL control channel (hereinafter referred to as "sPDCCH") share resources (that is, receipt of sPDSCH is controlled based on candidate resources for sPDCCH) within short TTIs, the present embodiment is applicable irrespective of the time duration of TTIs. For example, the present embodiment can also be applied when PDCCH (or EPDCCH) and PDSCH share resources within normal TTIs.

### (First Aspect)

According to a first aspect of the present invention, a DL assignment and a UL grant (when UL data is scheduled) addressed to a user terminal are both mapped to candidate resources (sPDCCH candidates) in an sPDSCH resource field (sPDSCH field) allocated by the DL assignment. In other words, an sPDSCH directed to a user terminal is scheduled so that the sPDCCH candidate in which the DL assignment to schedule that sPDSCH, and a UL grant (when UL data is scheduled), are included.

According to this first aspect, a user terminal blind-detects the sPDCCH candidates in the search space, and performs receiving processes (for example, demapping, demodulation, decoding, etc.) for a DL data channel on the aassumption that the DL data channel is mapped to sPDCCH candidates where no DCI (DL assignment or UL grant) for the user terminal is detected (unoccupied sPDCCH candidates).

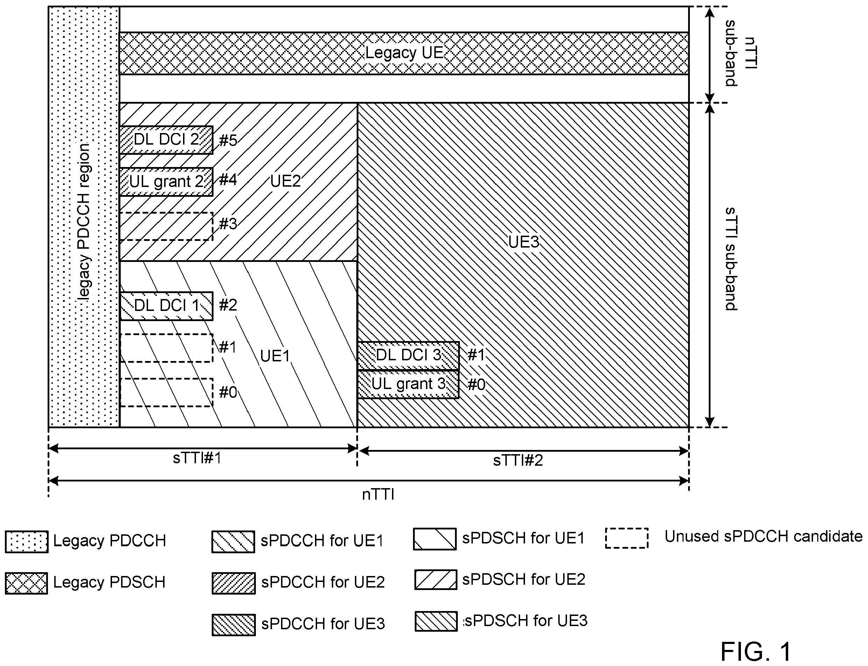

FIG. 1 is a diagram to show an example of sPDSCH mapping according to the first aspect. For example, FIG. 1 shows a case where two TTIs of 0.5 ms are provided within an sTTI of 1 ms, but the sTTI configuration is by no means limited to this.

As shown in FIG. 1, each user terminal's sPDSCH is scheduled so as to include at least one sPDCCH candidate. For example, in sTTI #1 of FIG. 1, a search space to accommodate sPDCCH candidates #0 to #5 is set, and user terminals 1 and 2 blind-decode sPDCCH candidates #0 to #5. Furthermore, in sTTI #2 of FIG. 1, a search space to accommodate sPDCCH candidates #0 and #1 is set. Note that, although a search space that is common to one or more user terminals is provided in FIG. 1, this is not limiting, and user terminal-specific search spaces may be configured as well.

For example, in FIG. 1, the radio base station maps the sPDSCH for user terminal 1 to unoccupied sPDCCH candidates #0 and #1 in the sPDSCH field for user terminal 1. User terminal 1 blind-decodes sPDCCH candidates #0 to #5, and detects a DL assignment (DL DCI 1) for user terminal 1 in sPDCCH candidate #2. User terminal 1 holds the assumption that, in the sPDSCH field allocated by this DL assignment, the sPDSCH for user terminal 1 is mapped to sPDCCH candidates #0 and #1, where no DCI (DL assignment or UL grant) for user terminal 1 is detected.

Also, in FIG. 1, the radio base station maps the sPDSCH for user terminal 2 to unoccupied sPDCCH candidate #3 in the sPDSCH field for user terminal 2. User terminal 2 blind-decodes sPDCCH candidates #0 to #5, detects a DL assignment (DL DCI 2) for user terminal 2 in sPDCCH candidate #5, and detects a UL grant (UL grant 2) for user terminal 2 in sPDCCH candidate #4. User terminal 2 holds the assumption that the sPDSCH for user terminal 2 is mapped to sPDCCH candidate #3 where no DCI (DL assignment or UL grant) for user terminal 2 is detected.

Note that, in FIG. 1, as a result of blind decoding, user terminal 3 detects a UL grant (UL grant 3) for user terminal 3 in sPDCCH candidate #0, and detects a DL assignment (DL DCI 3) for user terminal 3 in sPDCCH candidate #1. DCI for user terminal 3 is detected in sPDCCHs #0 and #1 in the sPDSCH field for user terminal 3, so that user terminal 3 assumes that no sPDSCH is mapped to sPDCCHs #0 and #1 and that rate matching or puncturing to match the proportion of these sPDCCH candidate resources is applied to the sPDSCH, and user terminal 3 performs receiving processes accordingly.

According to the first aspect, a user terminal's DCI is included in the sPDSCH field scheduled for that user terminal. Therefore, even when there are sPDCCH candidates which are accommodated in the sPDSCH field scheduled for the user terminal and in which no DCI for the user terminal is mapped, DCI for other user terminals is not mapped to these sPDCCH candidates. For example, in FIG. 1, no other user terminals' DCI is mapped to sPDCCH candidates #0 and #1 in the sPDSCH field for user terminal 1.

Consequently, in an sPDSCH field for a given user terminal, sPDSCHs for that user terminal can be allocated in sPDCCH candidates in which no DCI (DL assignment or UL grant) is mapped, so that it is possible to improve the efficiency of the use of resources within sTTIs. Note that, according to the first aspect, in order to transmit a UL grant for a user terminal, it is necessary to allocate an sPDSCH for that user terminal.

### (Second Aspect)

According to a second aspect of the present invention, a UL grant directed to a user terminal is mapped to an sPDCCH candidate that is provided in the sPDSCH field allocated by a DL assignment for that user terminal. In other words, an sPDSCH that is directed to a user terminal is scheduled so as to include the sPDCCH candidate where a UL grant (when UL data is scheduled) is mapped. According to this second aspect, a DL assignment directed to this user terminal needs not be mapped to an sPDCCH candidate in the sPDSCH field for the user terminal.

According to this second aspect, a user terminal blind-decodes the sPDCCH candidates in the search space, and, on assumption that the DL data channels for the user terminal are mapped to sPDCCH candidates where no DCI (UL grant or DL assignment) for this user terminal is detected (unoccupied sPDCCH candidates), performs receiving processes (for example, demapping, demodulation, decoding, etc.) for these DL data channels accordingly.

In the second aspect, when a DL assignment addressed to a user terminal is not mapped to an sPDCCH candidate in the sPDSCH field allocated by that DL assignment, the radio base station does not have to allocate an sPDSCH for another user terminal to the frequency resource that includes the sPDCCH candidate where this DL assignment is mapped (first scheduling control).

Alternatively, according to the second aspect, if a DL assignment addressing a user terminal is not mapped to an sPDCCH candidate inside the sPDSCH field allocated by this DL assignment, the radio base station can allocate an sPDSCH for another user terminal to the frequency resource that accommodates the sPDCCH candidate where the DL assignment is mapped (second scheduling control).

### <First Scheduling Control>

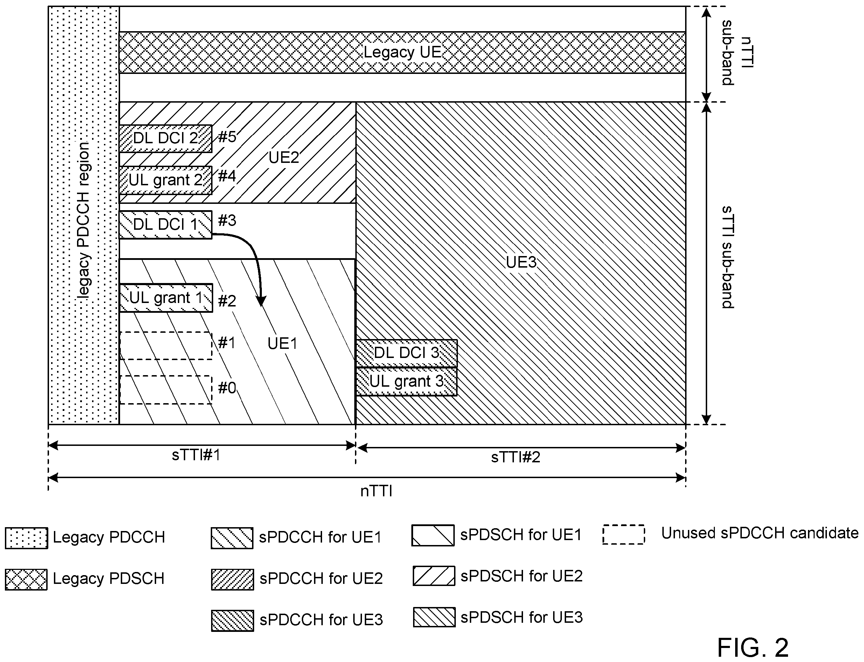

FIG. 2 is a diagram to show an example of first scheduling control according to the second aspect of the present invention. In FIG. 2, differences from FIG. 1 described in the first aspect will be primarily described.

As shown in FIG. 2, according to the second aspect, it is likely that a DL assignment for a user terminal is mapped to an sPDCCH candidate outside the sPDSCH field allocated to the user terminal (for example, an sPDCCH candidate in another user terminal's sPDSCH field). For example, in FIG. 2, a DL assignment for user terminal 1 is mapped to sPDCCH candidate #3 in the sPDSCH field for user terminal 2.

In FIG. 2, the radio base station maps a UL grant (UL grant 1) for user terminal 1 to sPDCCH candidate #2 inside the sPDSCH field for user terminal 1, and maps sPDSCHs for user terminal 1 to unoccupied sPDCCH candidates #0 and #1.

User terminal 1 blind-decodes sPDCCH candidates #0 to #5, detects a DL assignment (DL DCI 1) for user terminal 1 in sPDCCH candidate #3, and detects a UL grant (UL grant 1) for user terminal 1 in sPDCCH candidate #2. User terminal 1 assumes that an sPDSCH for user terminal 1 is mapped to sPDCCH candidates #0 and #1 where no DCI (DL assignment or UL grant) for user terminal 1 is detected.

Meanwhile, in FIG. 2, the radio base station maps the DCI (DL assignment (DL DCI 2)) for user terminal 2 and UL grant (UL grant 2)) to sPDCCH candidates #4 and #5, and maps the DL assignment (DL DCI 1) for user terminal 1 to sPDCCH candidate #3. In this case, as shown in FIG. 2, the radio base station does not have to allocate an sPDSCH for another user terminal (for example, user terminal 2) to the frequency resource that accommodates sPDCCH candidate #3, where a DL assignment for user terminal 1 is mapped.

User terminal 2 blind-decodes sPDCCH candidates #0 to #5, and detects DCI for user terminal 2 in sPDCCH candidates #4 and #5. User terminal 2 performs sPDSCH receiving processes based on the DL assignment (DL DCI 2) detected in sPDCCH candidate #5.

When an sPDSCH for another user terminal (for example, user terminal 2) is allocated to the frequency resource that accommodates sPDCCH candidate #3, where a DL assignment for user terminal 1 is mapped, that another user terminal is unable to detect the DL assignment for user terminal 1 mapped to sPDCCH candidate #3, and ends up assuming that an sPDSCH is mapped to this sPDCCH candidate #3, and, as a result of this, the error rate of this sPDSCH increases.

In the example of first scheduling control shown in FIG. 2, it is possible to prevent the sPDSCH error rate from increasing by canceling allocating an sPDSCH for another user terminal to the frequency resource where sPDCCH candidate #3 is accommodated.

### <Second Scheduling Control>

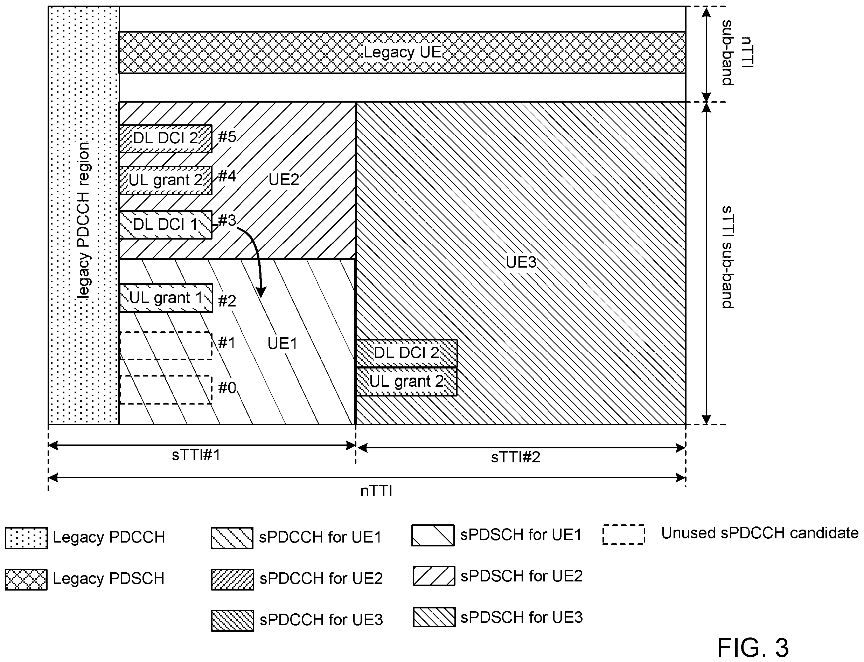

FIG. 3 is a diagram to show an example of second scheduling control according to the second aspect. With FIG. 3, differences from FIG. 2 will be primarily described. According to the second scheduling control, as shown in FIG. 3, a radio base station can allocate an sPDSCH for another user terminal (for example, user terminal 2) to the frequency resource that accommodates sPDCCH candidate #3, where a DL assignment for user terminal 1 is mapped.

Referring to FIG. 3, user terminal 2 is unable to detect the DCI for user terminal 1 mapped to sPDCCH candidate #3 in the sPDSCH field for user terminal 2, and judges that this sPDCCH candidate is unoccupied. Consequently, in FIG. 3, user terminal 2 ends up assuming that an sPDSCH for user terminal 2 is mapped to sPDCCH candidate #3 where DCI for user terminal 1 is mapped, and performing receiving processes for the sPDSCH accordingly. As a result of this, the sPDSCH error rate of user terminal 2 increases.

As described above, according to the second scheduling control, a DL assignment for user terminal 1 is mapped to an sPDCCH candidate in the sPDSCH field for user terminal 2, so that it is possible to improve the efficiency of the use of radio resources, while allowing an increase in the sPDSCH error rate of user terminal 2.

As described above, according to the second aspect, it is possible to allocate sPDSCHs for a user terminal to sPDCCH candidates where no DCI (DL assignment or UL grant) is mapped, in the sPDSCH field for that user terminal. Therefore, it is possible to improve the efficiency of the use of resources within sTTIs. Note that, according to the second aspect, in order to transmit a UL grant for a user terminal, it is necessary to allocate an sPDSCH for that user terminal.

### (Third Aspect)

According to a third aspect of the present invention, a DL assignment directed to a user terminal is mapped to an sPDCCH candidate inside the sPDSCH field allocated by this DL assignment. In other words, an sPDSCH for a user terminal is scheduled so as to accommodate the sPDCCH candidate where an DL assignment is mapped. With this third aspect, a UL grant for the user terminal needs not be mapped to an sPDCCH candidate in the sPDSCH field.

According to the third aspect, a user terminal blind-decodes the sPDCCH candidates in the search space, and performs receiving processes (for example, demapping, demodulation, decoding, etc.) for a DL data channel on the aassumption that the DL data channel is mapped to sPDCCH candidates where no DCI (UL grant or DL assignment) for the user terminal is detected (unoccupied sPDCCH candidates).

According to the third aspect, when a radio base station transmits a UL grant to a user terminal to which no sPDSCH is allocated, the radio base station does not allocate an sPDSCH for another user terminal to the frequency resource that includes the sPDCCH candidate where the UL grant is allocated (first scheduling control).

Alternatively, according to the third aspect, when the radio base station transmits a UL grant to a user terminal to which no sPDSCH is allocated, the radio base station can allocate an sPDSCH for another user terminal to the frequency resource that includes the sPDCCH candidate to which this UL grant is allocated (second scheduling control).

Here, the frequency resource to include the sPDCCH candidate where the UL grant is allocated may refer to, for example, the resource block (RB) to include the resource element (RE) where the sPDCCH candidate is mapped, the resource block group (RBG) including that RE, or the subband including that RE.

In the third aspect, sPDCCH candidates may be user terminal-specific or may be common to a plurality of user terminals (UE-common). One or more UE-specific sPDCCH candidates may be referred to as "UE-specific search spaces," and/or the like. Furthermore, one or more UE-specific sPDCCH candidates may be referred to as "UE-specific search spaces" and/or the like. Note that a UE-specific search space can also be used as a search space that is common to other UEs, depending on how the parameters and/or others are configured.

Note that the resources (for example, REs, RBs, RBGs (subbands) and/or others) to map UE-specific and/or UE-common sPDCCH candidates may be determined in advance, or may be specified by higher layer signaling and/or physical layer signaling. An existing PDCCH may be used in the event of physical layer signaling.

Hereinafter, cases to use UE-specific sPDCCH candidates and UE-common sPDCCH candidates will be described, as examples of first and second scheduling control.

### <First Scheduling Control>

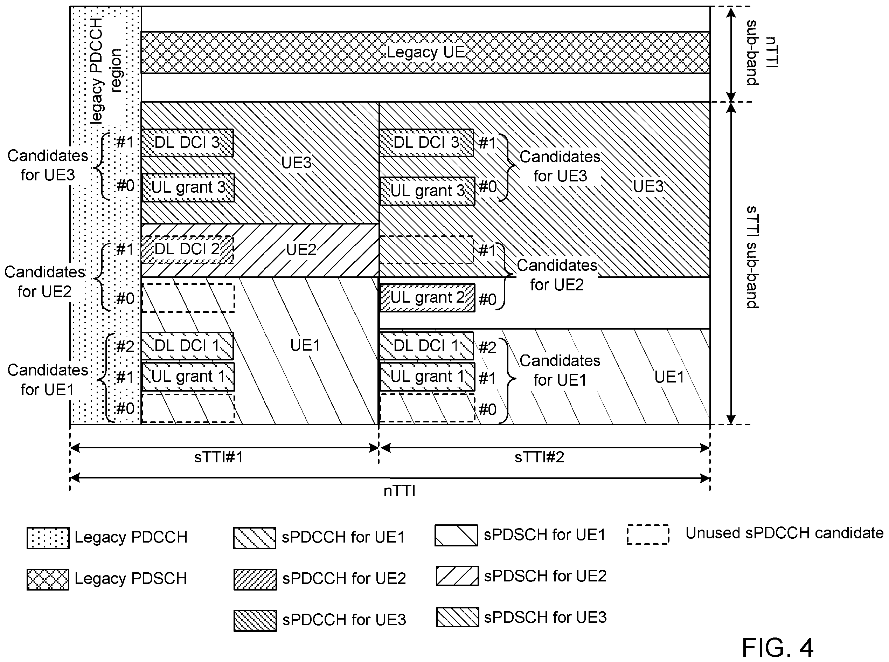

FIG. 4 is a diagram to show an example of first scheduling control according to the third aspect of the present invention. With reference to FIG. 4, a case will be described in which UE-specific sPDCCH candidates are configured on a per user terminal basis. For example, in FIG. 4, each of in sTTIs #1 and #2, sPDCCH candidates #0 to #2 are provided for user terminal 1, sPDCCH candidates #0 and #1 are provided for user terminal 2, and sPDCCH candidates #0 and #1 are provided for user terminal 3.

As shown in FIG. 4, in the third aspect, at least a DL assignment is mapped to an sPDCCH candidate inside the sPDSCH field allocated by that DL assignment. A UL grant may be mapped to an sPDCCH candidate in this sPDSCH field, or may be mapped to an sPDCCH candidate outside the sPDSCH field.

For example, in sTTI #1 of FIG. 4, user terminal 1 blind-decodes sPDCCH candidates #0 to #2 for user terminal 1, and detects a UL grant (UL grant 1) and a DL assignment (DL DCI 1) for user terminal 1. Also, user terminal 1 assumes that an sPDSCH for user terminal 1 is mapped to sPDCCH candidate #0 for user terminal 1 inside the sPDSCH field allocated by that DL assignment, and performs receiving processes (for example, demapping, demodulation, decoding, etc.) for the sPDSCH.

Also, in sTTI #1 of FIG. 4, user terminal 2 blind-decodes sPDCCH candidates #0 and #1 for user terminal 2, and detects a DL assignment (DL DCI 2) for user terminal 2. As shown in FIG. 4, if sPDCCH candidate #0 for user terminal 2 is not used for DCI for user terminal 2, the radio base station can allocate sPDSCH for another user terminal (here, user terminal 1) to unoccupied sPDCCH candidate #0.

Note that this sPDCCH candidate #0 is not included in the sPDSCH field for user terminal 2. Consequently, user terminal 2 does not have to consider whether or not an sPDSCH for user terminal 2 is mapped in sPDCCH candidate #0.

Also, in sTTI #2 of FIG. 4, sPDCCH candidate #1 for user terminal 2 is not used for DCI for user terminal 2. In this case, the radio base station can allocate an sPDSCH for another user terminal (here, user terminal 3) to unoccupied sPDCCH candidate #1.

Also, in sTTI #2 of FIG. 4, while no sPDSCH for user terminal 2 is allocated, a UL grant for this user terminal 2 is mapped to sPDCCH candidate #0. In this case, as shown in FIG. 4, the radio base station does not have to allocate an sPDSCH for another user terminal to the frequency resource (for example, the RB or the RBG (subband)) where this sPDCCH candidate #0 is included.

When an sPDSCH for another user terminal is allocated to the frequency resource including this sPDCCH candidate #0, the other user terminal is unable to detect the UL grant for user terminal 2 mapped to this sPDCCH candidate #0, and ends up assuming that an sPDSCH for the other user terminal is mapped to this candidate #0, and, as a result of this, the error rate of this sPDSCH increases. As shown in FIG. 4, it is possible to prevent the sPDSCH error rate from increasing by canceling allocating an sPDSCH for another user terminal to the frequency resource where sPDCCH candidate #0 is accommodated.

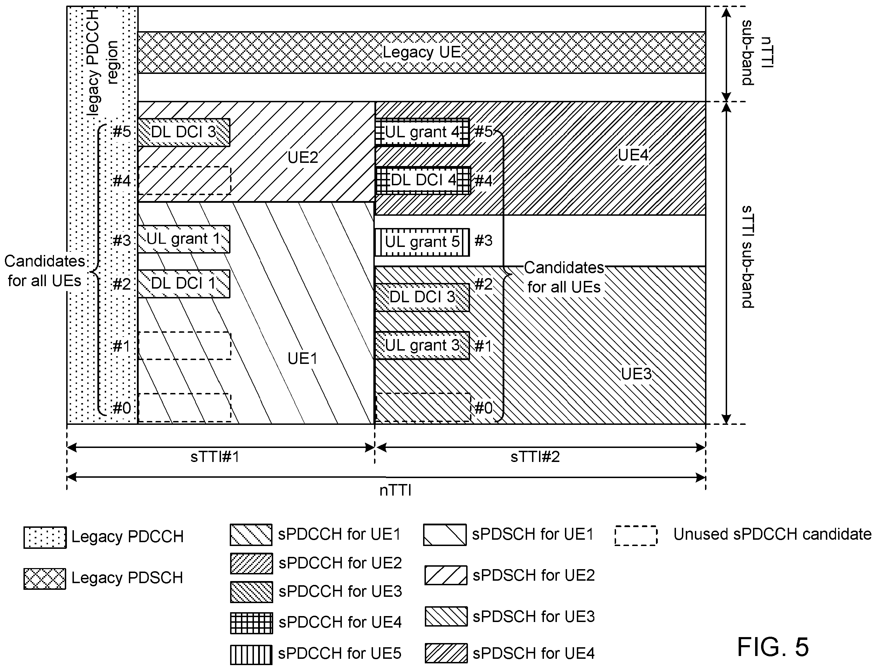

FIG. 5 is a diagram to show another example of first scheduling control according to the third aspect. A case will be described, with reference to FIG. 5, where an sPDCCH candidate that is common to a plurality of user terminals is configured. For example, in FIG. 5, sPDCCH candidates #0 to #5, which are common to a plurality of user terminals, are provided in each of sTTIs #1 and #2. With reference to FIG. 5, differences from FIG. 4 will be primarily described.

For example, in sTTI #1 of FIG. 5, user terminal 1 blind-detects sPDCCH candidates #0 to #5, and detects a UL grant (UL grant 1) and a DL assignment (DL DCI 1) for user terminal 1. Also, on assumption that sPDSCHs for user terminal 1 are mapped to sPDCCH candidates #0 and #1 where no DCI is detected inside the sPDSCH field allocated by that DL assignment, user terminal 1 performs sPDSCH receiving processes (for example, demapping, demodulation, decoding, etc.). This also applies to user terminal 2 in sTTI #1 and user terminal 3 in sTTI #2.

Also, in sTTI #2 of FIG. 5, while no sPDSCH is allocated to user terminal 5, a UL grant for this user terminal 5 is mapped to sPDCCH candidate #3. In this case, as shown in FIG. 5, the radio base station does not have to allocate an sPDSCH for another user terminal to the frequency resource (for example, the RB or the RBG (subband)) where this sPDCCH candidate #3 is included.

As described above, when an sPDSCH for another user terminal is allocated to the frequency resource where this sPDCCH candidate #3 is included, this another user terminal is unable to detect the UL grant for user terminal 5 that is mapped to sPDCCH candidate #0, and ends up assuming that an sPDSCH for the other user terminal is mapped to sPDCCH candidate #3, and, as a result of this, the error rate of the sPDSCH increases. As shown in FIG. 5, it is possible to prevent the sPDSCH error rate from increasing by canceling allocating an sPDSCH for another user terminal to the frequency resource where sPDCCH candidate #3 is accommodated.

### <Second Scheduling Control>

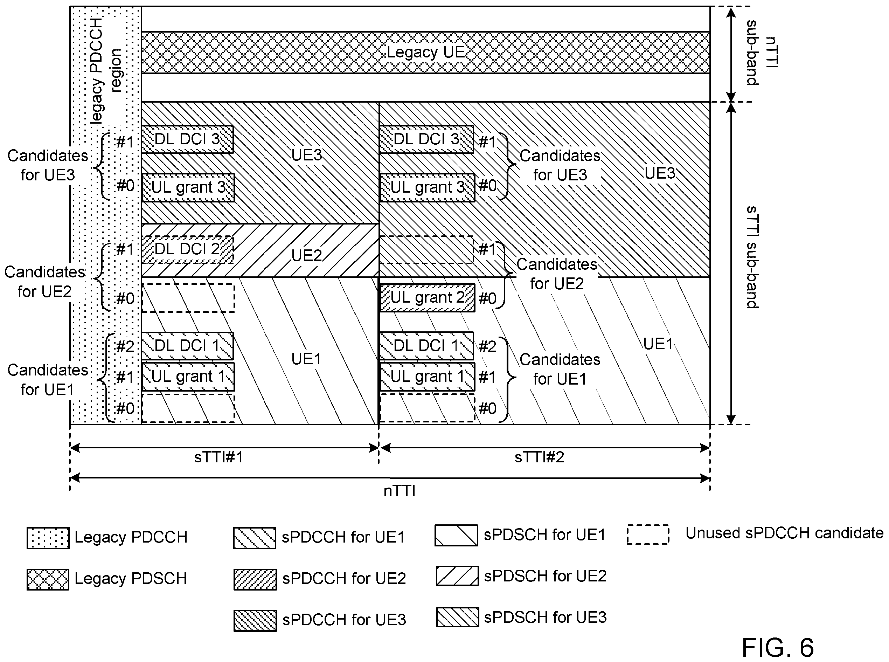

FIG. 6 is a diagram to show an example of second scheduling control according to the third aspect. In FIG. 6, as in FIG. 4, sPDCCH candidates #0 to #2 for user terminal 1, sPDCCH candidates #0 and #1 for user terminal 2, and sPDCCH candidates #0 and #1 for user terminal 3 are provided in each of sTTI #1 and #2. Hereinafter, with reference to FIG. 6, differences from FIG. 4 will be primarily described.

In second scheduling control, as shown in sTTI #2 of FIG. 6, the radio base station maps the UL grant for user terminal 2 to sPDCCH candidate #0 for user terminal 2 without allocating the sPDSCH for user terminal 2.

In this case, as shown in FIG. 6, the radio base station can allocate an sPDSCH for another user terminal (here, user terminal 1) to the frequency resource (for example, the RB or the RBG (subband)) that includes sPDCCH candidate #0 for user terminal 2. The radio base station punctures and transmits the sPDSCH for user terminal 1 in sPDCCH candidate #0, to which a UL grant for user terminal 2 is mapped.

In sTTI #2 of FIG. 6, user terminal 1 is unable to detect the UL grant (UL grant 2) for user terminal 2, mapped to sPDCCH candidate #0 for user terminal 2 inside the sPDSCH field for user terminal 1, and judges that this sPDCCH candidate #0 is unoccupied. Therefore, in FIG. 6, user terminal 1 ends up assuming that an sPDSCH for user terminal 1 is mapped to sPDCCH candidate #0 where a UL grant for user terminal 2 is mapped, and performing receiving processes for the sPDSCH accordingly, without puncturing sPDCCH candidate #0. As a result of this, the sPDSCH error rate for user terminal 1 increases.

In this way, according to the second scheduling control shown in FIG. 6, an sPDSCH for another user terminal 1 is allocated to the frequency resource that includes the sPDCCH candidate where a UL grant for user terminal 2 is mapped, so that, while allowing an increase in the sPDSCH error rate for user terminal 1, it is possible to reduce unoccupied frequency resources that are not allocated to any user terminal, and improve the efficiency of the use of radio resources. The deterioration due to UL grants for other user terminals included in this sPDSCH can be reduced by lowering the coding rate and the number of MIMO layers.

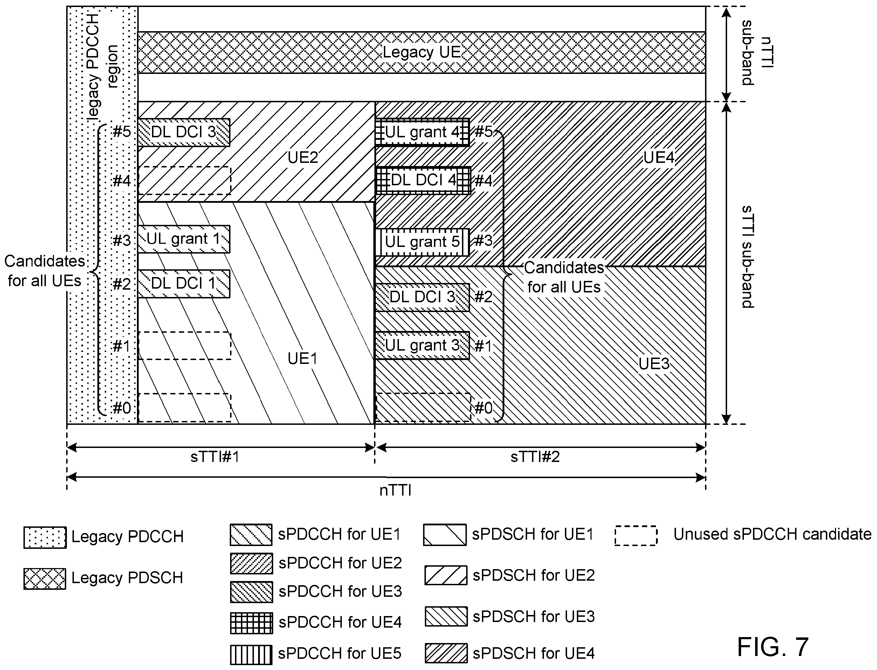

FIG. 7 is a diagram to show another example of second scheduling control according to the third aspect. In FIG. 7, similar to FIG. 5, sPDCCH candidates #0 to #5, which are common to a plurality of user terminals, are provided in each of sTTIs #1 and #2. With reference to FIG. 7, differences from FIG. 5 will be primarily described below.

In sTTI #2 of FIG. 7, while no sPDSCH for user terminal 5 is allocated, a UL grant for user terminal 5 is mapped to sPDCCH candidate #3. In this case, as shown in FIG. 7, the radio base station can allocate an sPDSCH for another user terminal (here, user terminal 4) to the frequency resource (for example, the RB or the RBG (subband)) where sPDCCH candidate #3 is included. The radio base station punctures and transmits an sPDSCH for user terminal 4 in sPDCCH candidate #3, where a UL grant for user terminal 5 is mapped.

In sTTI #2 of FIG. 7, user terminal 4 is unable to detect the UL grant (UL grant 5) for user terminal 5 mapped to sPDCCH candidate #3 in the sPDSCH field for user terminal 4, and judges that this sPDCCH candidate #3 is unoccupied. Consequently, in FIG. 7, user terminal 4 ends up assuming that an sPDSCH for user terminal 4 is mapped to sPDCCH candidate #3, where a UL grant for user terminal 5 is mapped, and performing receiving processes for this sPDCCH candidate #3 accordingly, without puncturing sPDCCH candidate #3. As a result of this, the sPDSCH error rate for user terminal 4 increases.

In this way, according to the second scheduling control shown in FIG. 7, an sPDSCH for another user terminal 4 is allocated to the frequency resource that includes the sPDCCH candidate where a UL grant for user terminal 5 is mapped, so that, while allowing an increase in the sPDSCH error rate for user terminal 4, it is possible to reduce unoccupied frequency resources that are not allocated to any user terminal, and improve the efficiency of the use of radio resources. The deterioration due to UL grants for other user terminals included in this sPDSCH can be reduced by lowering the coding rate and the number of MIMO layers.

As described above, according to the third aspect, it is possible to transmit a UL grant for a user terminal without allocating an sPDSCH for that user terminal.

### (Fourth Aspect)

According to a fourth aspect of the present invention, it is not necessary to map both a DL assignment for a user terminal and a UL grant to sPDCCH candidates inside the sPDSCH field that is allocated by that DL assignment.

According to the fourth aspect, a user terminal can judge, based on whether or not DCI (DL assignment or UL grant) that is detected in an sPDCCH candidate in the search space is detected in an sPDCCH candidate in the sPDSCH field for this user terminal, whether or not an sPDSCH is mapped to an sPDCCH candidate where no DCI is detected, inside the sPDSCH field (first judgement regarding mapping).

To be more specific, if DCI that has been detected cannot be detected in an sPDCCH candidate inside the sPDSCH field for the user terminal (that is, the DCI is mapped to a candidate resource outside the sPDSCH field), the user terminal can assume (judge) that an sPDSCH is mapped to the sPDCCH candidate where no DCI is detected, inside the sPDSCH field.

Meanwhile, when DCI that has been detected is mapped to an sPDCCH candidate inside the sPDSCH field for the user terminal (that is, the DCI is not detected in candidate resources outside the sPDSCH field), the user terminal can assume (judge) that no sPDSCH is mapped, at least in the partial sPDCCH candidates where no DCI is detected, inside this sPDSCH field. That is, the user terminal may assume that no sPDSCH is mapped to any of the sPDCCH candidates where DCI is not detected, inside the sPDSCH field, or assume that this absence of mapping of sPDSCHs holds true only in part of the sPDCCH candidates.

For example, indices (numbers) that are common between a radio base station and a user terminal may be assigned to sPDCCH candidate resources, and, when DCI that has been detected is mapped to an sPDCCH candidate inside the sPDSCH field for the user terminal, the user terminal may assume that, among the sPDCCH candidates in the sPDSCH field, a scheduled sPDSCH is not mapped to an sPDCCH candidate having a smaller index number than the sPDCCH candidate where the DCI has been detected, and that an sPDSCH is mapped to an sPDCCH candidate having a larger index number than the sPDCCH candidate where the DCI has been detected.

First, when DCI that has been detected is not detected in an sPDCCH candidate inside the sPDSCH field for the user terminal (that is, the DCI is mapped to a candidate resource outside the sPDSCH field), sPDSCHs can be mapped to resources, including sPDCCH candidate resources, so that the spectral efficiency can be improved.

Also, even when DCI that has been detected is detected in an sPDCCH candidate inside the sPDSCH field for the user terminal (that is, the DCI is mapped to a candidate resource inside the sPDSCH field), the DCI can be mapped to an sPDCCH candidate resource based on the rule shared between the base station and the user terminal, so that it is possible to identify the sPDCCH candidate resources where the DCI is not mapped and increase the resources to map sPDSCHs to, resulting in improved spectral efficiency.

Alternatively, according to the fourth aspect, the user terminal may judge, based on specifying information that is contained in DCI (DL assignment) detected in an sPDCCH candidate inside the search space, whether or not an sPDSCH is mapped to a candidate resource where the DCI is not detected, inside the sPDSCH field for the user terminal (second judgement regarding mapping).

### <First Judgement Regarding Mapping>

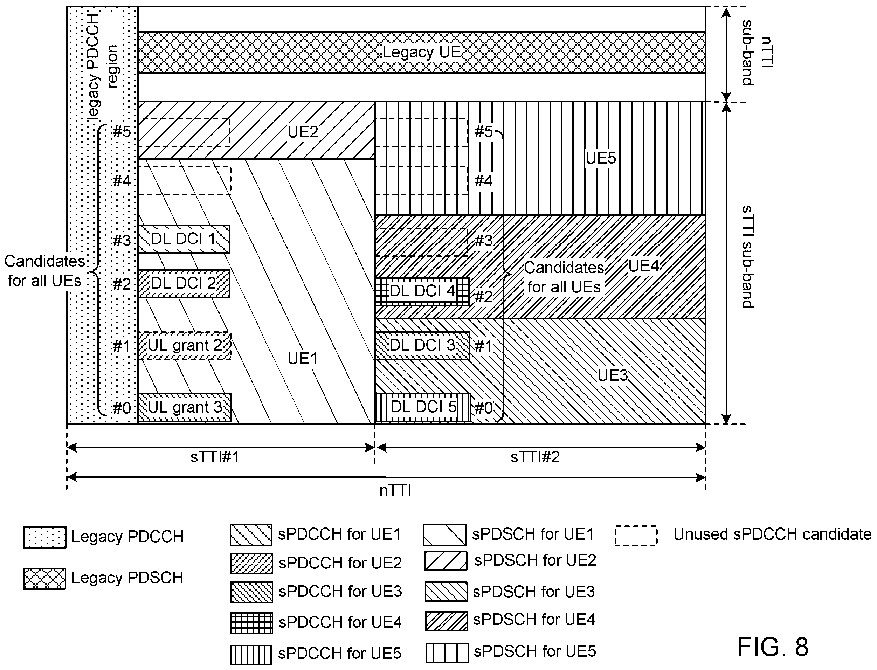

FIG. 8 is a diagram to show an example of first judgment regarding mapping of sPDSCHs according to the fourth aspect of the present invention. In FIG. 8, sPDCCH candidates that are common to a plurality of user terminals are configured. For example, in FIG. 8, sPDCCH candidates #0 to #5, which are common to a plurality of user terminals, are provided in each of sTTI #1 and #2. With reference to FIG. 8, differences from FIG. 5 will be primarily described below.

For example, in sTTI #1 of FIG. 8, the radio base station maps DCIs for other user terminals (here, user terminals 3 and 2) to sPDCCH candidates #0 to #2 having smaller index numbers, in the sPDSCH field for user terminal 1, maps DCI for user terminal 1 to sPDCCH candidate #3, and maps an sPDSCH for user terminal 1 to remaining sPDCCH candidate #4. Also, the radio base station maps an sPDSCH for user terminal 2 to sPDCCH candidate #5, inside the sPDSCH field for user terminal 2.

Similarly, in sTTI #2 of FIG. 8, the radio base station maps DCI for another user terminal (here, user terminal 5) to sPDCCH candidate #0 having a smaller index number, in the sPDSCH field for user terminal 3, and maps DCI for user terminal 3 to sPDCCH candidate #1.

Furthermore, in sTTI #2 of FIG. 8, the radio base station maps the DCI for user terminal 4 to sPDCCH candidate #2 in the sPDSCH field for user terminal 4, and maps an sPDSCH for user terminal 4 to remaining sPDCCH candidate #3. In addition, the radio base station maps sPDSCHs for user terminal 5 to sPDCCH candidates #4 and #5 in the sPDSCH field for user terminal 5.

In this way, when the radio base station maps DCI for a user terminal to an sPDCCH candidate in the sPDSCH field for this user terminal, the radio base station first maps DCIs for other user terminals to sPDCCH candidates having smaller index numbers, then maps the DCI for the user terminal, and maps sPDSCHs for the user terminal to the rest of the sPDCCH candidates.

In sTTI #1 of FIG. 8, user terminal 1 blind-decodes sPDCCH candidates #0 to #5, and detects DCI (here, DL assignment (DL DCI 1)) for user terminal 1 in sPDCCH candidate #3. User terminal 1 judges whether sPDCCH candidate #3, where the DCI is detected, is included in the resource field (that is, the sPDSCH field) indicated by the DL assignment.

In FIG. 8, sPDCCH candidate #3 in which the DCI for user terminal 1 is detected is included in the sPDSCH field for user terminal 1. Consequently, user terminal 1 assumes that, in the sPDSCH field, no sPDSCH for user terminal 1 is mapped to sPDCCH candidates #0 to #2 where the index numbers are smaller than sPDCCH candidate #3. Meanwhile, user terminal 1 assumes that, in the sPDSCH field for user terminal 1, an sPDSCH for user terminal 1 is mapped to sPDCCH candidate #4 having a larger index number than sPDCCH candidate #3.

Similarly, in sTTI #2 of FIG. 8, sPDCCH candidate #1, in which DCI for user terminal 3 is detected, is included in the sPDSCH field for user terminal 3. Consequently, user terminal 3 assumes that an sPDSCH for user terminal 3 is not mapped to sPDCCH candidate #0 having a smaller index number than sPDCCH candidate #1, in this sPDSCH field.

Also, in sTTI #2 of FIG. 8, sPDCCH candidate #2, in which DCI for user terminal 4 is detected, is included in the sPDSCH field for user terminal 4. Consequently, user terminal 4 assumes that an sPDSCH for user terminal 4 is mapped to sPDCCH candidate #3 having a larger index number than sPDCCH candidate #2, in the sPDSCH field.

Meanwhile, in sTTI #1 of FIG. 8, sPDCCH candidates #2 and #3, where DCI (here, UL grant 2 and DL assignment (DL DCI 2)) for user terminal 2 is detected, are outside the sPDSCH field for user terminal 2. Consequently, user terminal 2 assumes that an sPDSCH for user terminal 2 is mapped to sPDCCH candidate #5 in the sPDSCH field for user terminal 2.

Similarly, in sTTI #2 of FIG. 8, sPDCCH candidate #0, in which DCI for user terminal 5 is detected, is outside the sPDSCH field for user terminal 5. Consequently, user terminal 5 assumes that sPDSCHs for user terminal 5 are mapped to sPDCCH candidates #4 and #5 in the sPDSCH field for user terminal 5.

In the first judgement for mapping, the user terminal can judge whether or not sPDSCHs are mapped to sPDCCH candidates where no DCI is detected, within the sPDSCH field, without receiving an explicit report from the radio base station. Therefore, it is possible to reduce an increase in overhead related to this judgment.

### <Second Judgement Regarding Mapping>

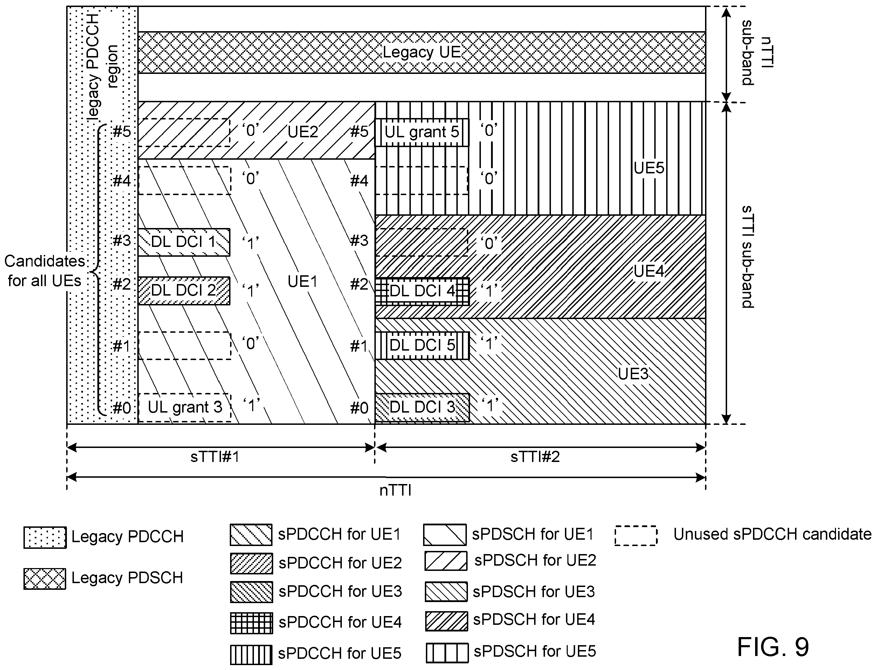

FIG. 9 is a diagram to show an example of second judgment regarding mapping of sPDSCHs according to the fourth aspect. FIG. 9 assumes that sPDCCH candidates that are common to a plurality of user terminals are configured. For example, in FIG. 9, sPDCCH candidates #0 to #5, which are common to a plurality of user terminals, are provided in each of sTTIs #1 and #2. With reference to FIG. 9, differences from FIG. 8 will be primarily described below.

For example, in sTTI #1 of FIG. 9, the radio base station maps DCI for user terminal 3 to sPDCCH candidate #0, maps DCI for user terminal 2 to sPDCCH candidate #2, and maps DCI for user terminal 1 to sPDCCH candidate #3. In this case, the radio base station transmits, in the DCI, specifying information that indicates that sPDCCH candidates #0, #2 and #3 are to be used for DCI.

For example, the specifying information is a bitmap that is equal in number to the number of sPDCCH candidates in the search space, or a bitmap of a size corresponding thereto, and may indicate whether the sPDCCH candidate corresponding to each bit is used for DCI or not. For example, when sPDCCH candidates #0 to #5 correspond to the first to sixth bits, respectively, in sTTI #1 of FIG. 9, "101100" may be included, as specifying information, in DL assignments (DL DCIs 1 and 2) for user terminals 1 and 2.

In sTTI #1 of FIG. 9, user terminal 1 assumes, from the specifying information contained in the DCI detected in sPDCCH candidate #3, that sPDSCHs for user terminal 1 are mapped in sPDCCH candidates #1 and #4 where the bit value is "0," in the sPDSCH field for user terminal 1.

Similarly, user terminal 2 assumes, from the specifying information contained in the DCI detected in sPDCCH candidate #2, that an sPDSCH for user terminal 2 is mapped in sPDCCH candidate #5 where the bit value is "0," in the sPDSCH field for user terminal 2.

The same is true for sTTI #2 in FIG. 9. In this manner, in the second judgment for mapping, whether, in the sPDSCH field for a user terminal, sPDSCHs are mapped to sPDCCH candidates where no DCI is detected is indicated to the user terminal by specifying information from the radio base station. Therefore, it is possible to reduce the processing load of the user terminal involved in judging whether sPDSCHs are mapped to sPDCCH candidates where no DCI is detected, inside the sPDSCH field.

Note that the above-mentioned bitmaps do not have to be included in DL assignments that schedule sPDSCHs in this sTTI, and may be reported via other control channels such as PDCCHs, for example. In this case, the user terminal judges, based on bitmaps reported in the PDCCHs, which sPDCCH candidate resources among the sPDCCH candidate resources in a predetermined search space are used for DCI. When the bit corresponding to a predetermined sPDCCH candidate resource is "0," the user terminal judges that this sPDCCH candidate resource is not used, and, when an sPDSCH to include this resource is scheduled, the user terminal assumes that the scheduled sPDSCH is mapped to the above sPDCCH candidate resource. On the other hand, when the bit corresponding to a predetermined sPDCCH candidate resource is "1," the user terminal judges that this sPDCCH candidate resource is used, and, when an sPDSCH to include this resource is scheduled, the user terminal assumes that the scheduled sPDSCH is not mapped to the above sPDCCH candidate resource.

Furthermore, the number of these bitmaps may be smaller than the number of sPDCCH candidate resources. For example, sPDCCH candidate resources that are subject to blind decoding within a given sTTI in a given carrier of a certain user terminal can be divided into a plurality of groups (for example, two groups), and whether or not scheduled sPDSCHs can be mapped to the sPDCCH candidate resources in each group can be reported by using bit maps that represent each group. For example, when sPDCCH candidate resources are divided into two groups and the above-described control is applied, the bitmap can be reduced to two bits. Each group where sPDCCH candidate resources belong may be referred to as a "search space," a "search space set," a "search space subset," and/or the like.

As described above, according to the fourth aspect, even when a DL assignment and a UL grant for a user terminal are not both mapped to sPDCCH candidates inside the sPDSCH field allocated by that DL assignment, it is still possible to use unoccupied sPDCCH candidates. Consequently, the efficiency of the use of radio resources can be improved.

### (Radio Communication System)

Now, the structure of a radio communication system according to the present embodiment will be described below. In this radio communication system, each radio communication method according to the above-described embodiments is employed. Note that the radio communication method according to each embodiment may be used alone or may be used in combination.

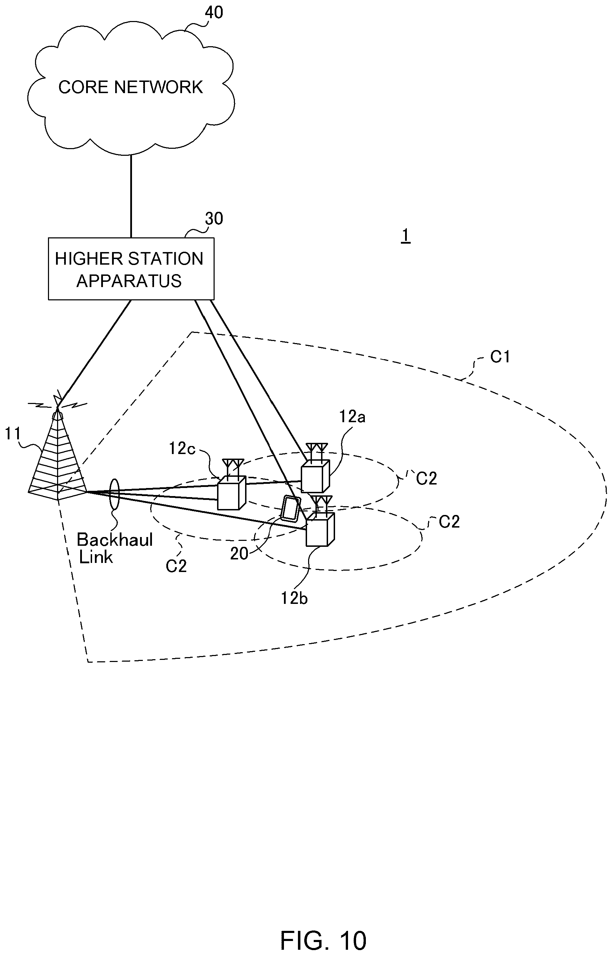

FIG. 10 is a diagram to show an example of a schematic structure of a radio communication system according to present embodiment. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. The radio communication system 1 may be also referred to as "SUPER 3G," "LTE-A (LTE-Advanced)," "IMT-Advanced," "4G," "5G," "FRA (Future Radio Access)," "NR (New RAT (New Radio Access Technology))," and so on.

The radio communication system 1 shown in FIG. 10 includes a radio base station 11 that forms a macro cell C1, and radio base stations 12a to 12c that form small cells C2, which are placed within the macro cell C1 and which are narrower than the macro cell C1. Also, user terminals 20 are placed in the macro cell C1 and in each small cell C2. A structure in which different numerologies are applied between cells and/or within cells may be adopted.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use license band CCs and unlicensed band CCs as a plurality of cells.

Furthermore, the user terminals 20 can communicate based on time division duplexing (TDD) or frequency division duplexing (FDD) in each cell. A TDD cell and an FDD cell may be referred to as a "TDD carrier (frame configuration type 2)," and an "FDD carrier (frame configuration type 1)," respectively.

Furthermore, in each cell (carrier), a single numerology may be employed, or a plurality of different numerologies may be employed. Here, "numerology" refers to communication parameters in the frequency direction and/or the time direction (for example, at least one of the subcarrier spacing (subcarrier interval), the bandwidth, the symbol duration, the CP duration, the TTI duration, the number of symbols per TTI, the radio frame configuration, the filtering process, the windowing process, and so on).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform inter-terminal (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combinations of these, and OFDMA may be used in UL.

In the radio communication system 1, a DL shared channel (PDSCH (Physical Downlink Shared CHannel), which is also referred to as, for example, a "DL data channel"), which is used by each user terminal 20 on a shared basis, a broadcast channel (PBCH (Physical Broadcast CHannel)), L1/L2 control channels and so on, are used as DL channels. User data, higher layer control information, SIBs (System Information Blocks) and so on are communicated in the PDSCH. Also, the MIB (Master Information Block) is communicated in the PBCH.

The L1/L2 control channels include DL control channels (a PDCCH (Physical Downlink Control CHannel), an EPDCCH (Enhanced Physical Downlink Control CHannel) and so on), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. HARQ retransmission command information (ACK/NACK) in response to the PUSCH can be communicated using at least one of the PHICH, the PDCCH and the EPDCCH.

In the radio communication system 1, a UL shared channel (PUSCH (Physical Uplink Shared CHannel), which is also referred to as "UL data channel" and so on), which is used by each user terminal 20 on a shared basis, a UL control channel (PUCCH (Physical Uplink Control CHannel)), a random access channel (PRACH (Physical Random Access CHannel)) and so on are used as UL channels. User data, higher layer control information and so on are communicated by the PUSCH. Uplink control information (UCI), including at least one of DL signal retransmission control information (A/N), channel state information (CSI) and so on, is communicated in the PUSCH or the PUCCH. By means of the PRACH, random access preambles for establishing connections with cells are communicated.

### (Radio Base Station)

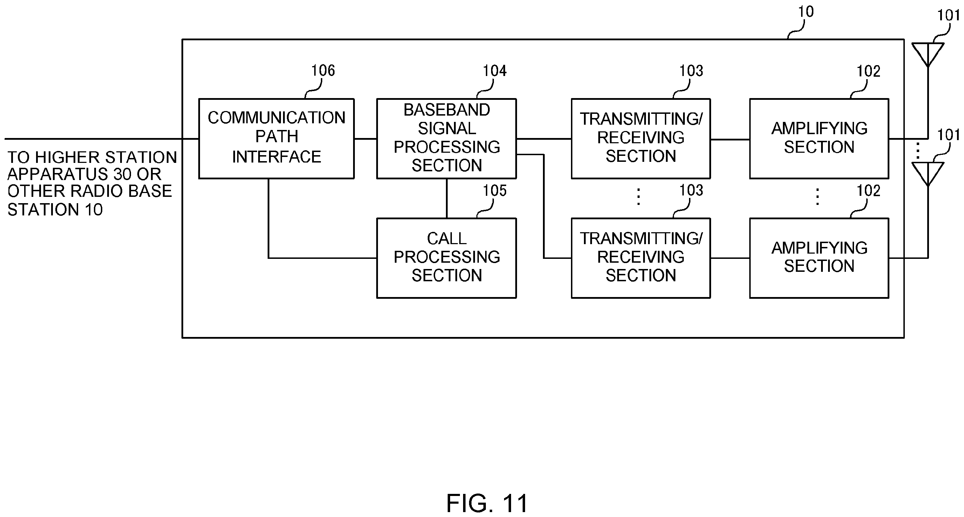

FIG. 11 is a diagram to show an example of an overall structure of a radio base station according to present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving sections 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for UL signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10 and manages the radio resources.

The communication path interface section 106 transmits and receives signals to and from the higher station apparatus 30 via a predetermined interface. Also, the communication path interface 106 may transmit and/or receive signals (backhaul signaling) with neighboring radio base stations 10 via an inter-base station interface (for example, an interface in compliance with the CPRI (Common Public Radio Interface), such as optical fiber, the X2 interface, etc.).

In addition, the transmitting/receiving sections 103 transmit DL control channels and DL data channels. Here, the DL control channels may be mapped to candidate resources (for example, sPDCCH candidates) in search spaces.

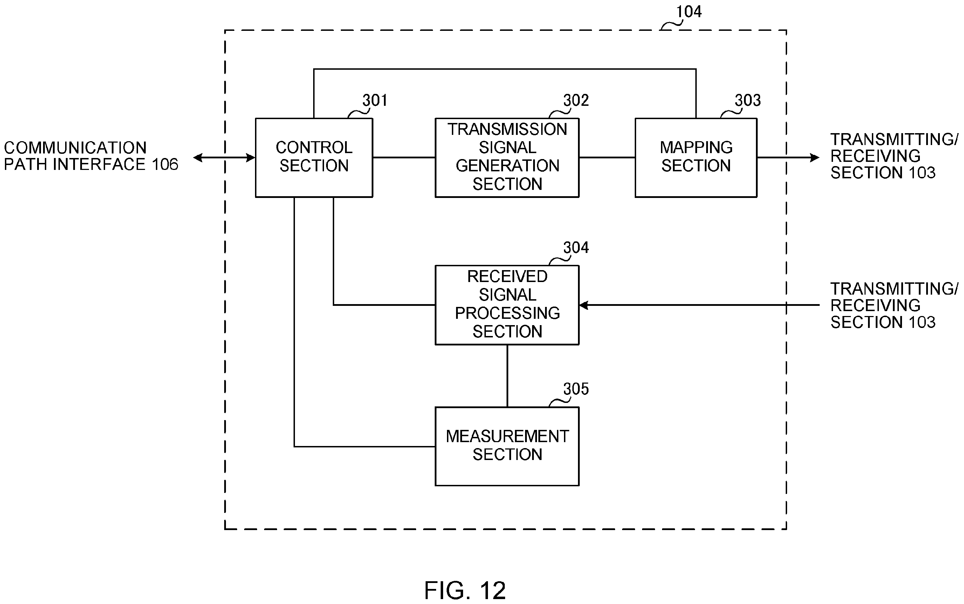

FIG. 12 is a diagram to show an example of a functional structure of a radio base station according to present embodiment. Note that, although FIG. 12 primarily shows functional blocks that pertain to characteristic parts of the present embodiment, the radio base station 10 has other functional blocks that are necessary for radio communication as well. As shown in FIG. 12, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, the generation of DL signals by the transmission signal generation section 302, the mapping of DL signals by the mapping section 303, the receiving process (for example, demodulation) for UL signals by the received signal processing section 304 and the measurements by the measurement section 305.

The control section 301 schedules DL data channels and DL data channels for user terminals 20. The control section 301 exerts control so that DCI (DL assignments), which includes DL data channel scheduling information, and/or DCI (UL grants), which includes UL data channel scheduling information, are mapped to candidate resources (for example, sPDCCH candidates) for DL control channels (for example, sPDCCHs), and transmitted.

The control section 301 also controls mapping and/or transmission of DL data channels (for example, sPDSCHs) based on candidate resources where DCI is not mapped. To be more specific, the control section 301 may map DCI (DL assignment and/or UL grant) to candidate resources within the resource field (for example, the sPDSCH field) that is allocated to a DL data channel (the first to fourth aspects). Also, the control section 301 may map a DL data channels to a candidate resource where DCI is not mapped within this resource field (the first to fourth aspects).

Furthermore, the control section 301 may also map DCI (DL assignment and/or UL grant) to candidate resources outside the resource field (for example, the sPDSCH field) allocated for DL data channels (second to fourth aspects).

Also, when DCI (DL assignment) is mapped to a candidate resource outside this resource field, the control section 301 may cancel allocating a DL data channel for another user terminal to the frequency resource where this candidate resource is included (first scheduling control according to the second aspect), or allocate this DL data channel for the other user terminal (second scheduling control according to the second aspect).

Also, if DCI (UL grant) is mapped to a candidate resource without allocation of a DL data channel, the control section 301 may cancel allocating a DL data channel for another user terminal to the frequency resource where this candidate resource is included (first scheduling control according to the third aspect), or allocate this DL data channel for the other user terminal (second scheduling control according to the third aspect).

Also, the control section 301 may judge, based on whether DCI is mapped to a candidate resource in the resource field allocated for DL data channels, whether or not to map a DL data channel to a candidate resource where no DCI (DL assignment and/or UL grant) is detected inside that resource field (first judgement regarding mapping according to the fourth aspect).

In addition, the control section 301 may exert control so that specifying information to indicate whether or not DCI is mapped to each candidate resource in a search space is included in DCI and transmitted (second judgement regarding mapping according to the fourth aspect).

The control section 301 can be constituted by a controller, a control circuit or control apparatus that can be described based on general understanding of the technical field to which the present invention pertains.

The transmission signal generation section 302 generates DL signals (including DL data signals, DL control signals, DL reference signals and so on) based on commands from the control section 301, and outputs these signals to the mapping section 303. For the transmission signal generation section 302, a signal generator, a signal generation circuit or signal generation apparatus that can be described based on general understanding of the technical field to which the present invention pertains can be used.

The mapping section 303 maps the DL signals generated in the transmission signal generation section 302 to predetermined radio resources based on commands from the control section 301, and outputs these to the transmitting/receiving sections 103. For the mapping section 303, a mapper, a mapping circuit or mapping apparatus that can be described based on general understanding of the technical field to which the present invention pertains can be used.

The received signal processing section 304 performs receiving processes (for example, demapping, demodulation, decoding, etc.) of UL signals transmitted from the user terminals 20 (including, for example, a UL data channel, a UL control channel, a UL control signal, etc.).

The measurement section 305 conducts measurements with respect to the received signals. The measurement section 305 can be constituted by a measurer, a measurement circuit or measurement apparatus that can be described based on general understanding of the technical field to which the present invention pertains.

### (User Terminal)

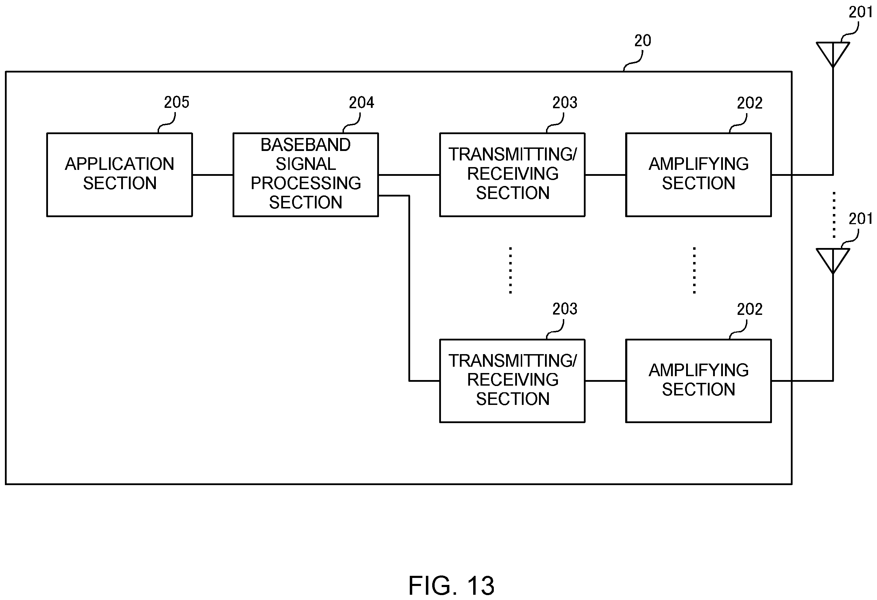

FIG. 13 is a diagram to show an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in a plurality of transmitting/receiving antennas 201 are each amplified in the amplifying sections 202. Each transmitting/receiving section 203 receives the DL signals amplified in the amplifying sections 202. The received signals are subjected to frequency conversion and converted into the baseband signal in the transmitting/receiving sections 203, and output to the baseband signal processing section 204.

In the baseband signal processing section 204, the baseband signal that is input is subjected to an FFT process, error correction decoding, a retransmission control receiving process, and so on. The DL data is forwarded to the application section 205. The application section 205 performs processes related to higher layers above the physical layer and the MAC layer, and so on. Also, the broadcast information is also forwarded to application section 205.

Meanwhile, the UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (for example, DL retransmission control information, channel state information, etc.) is also subjected to channel encoding, rate matching, puncturing, DFT process, IFFT process, etc., and transferred to each transmitting/receiving section 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

In addition, the transmitting/receiving sections 203 receive DL control channels and DL data channels. Here, the DL control channels may be mapped to candidate resources in search spaces (for example, sPDCCH candidates).

For the transmitting/receiving sections 203, transmitters/receivers, transmitting/receiving circuits or transmitting/receiving apparatus that can be described based on general understanding of the technical field to which the present invention pertains can be used. Furthermore, a transmitting/receiving section 203 may be structured as one transmitting/receiving section, or may be formed with a transmitting section and a receiving section.

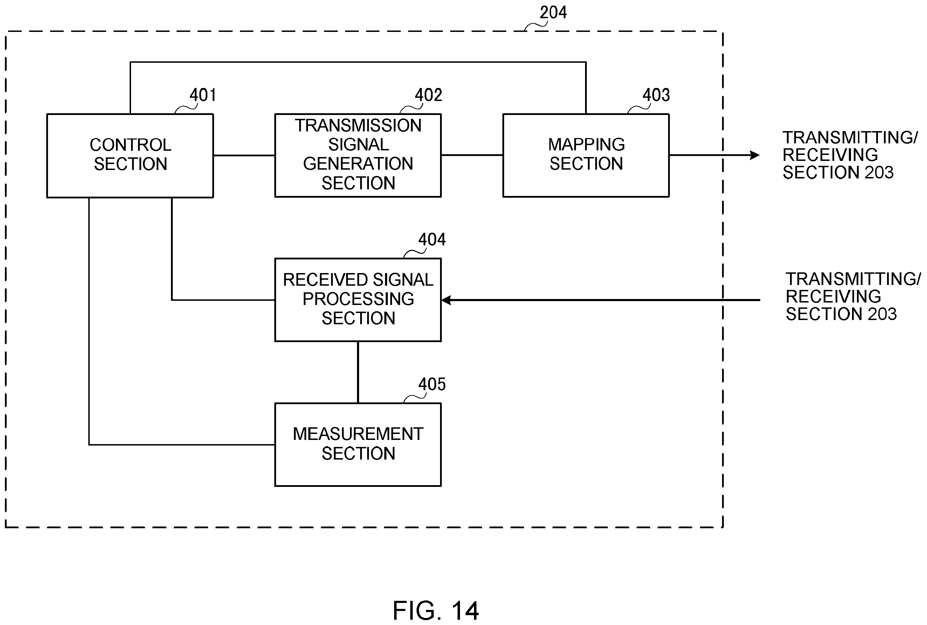

FIG. 14 is a diagram to show an example of a functional structure of a user terminal according to present embodiment. Note that, although FIG. 14 primarily shows functional blocks that pertain to characteristic parts of the present embodiment, user terminal 20 has other functional blocks that are necessary for radio communication as well. As shown in FIG. 14, the baseband signal processing section 204 provided in user terminal 20 has a control section 401, a transmission signal generation section 402, a mapping section 403, a received signal processing section 404 and a measurement section 405.

The control section 401 controls the whole of user terminal 20. The control section 401 controls, for example, the generation of UL signals in the transmission signal generation section 402, the mapping of UL signals in the mapping section 403, the DL signal receiving processes in the received signal processing section 404, the measurements in the measurement section 405 and so on.

The control section 401 controls receipt of DL data channels and transmission of UL data channels based on DCI (DL assignment and/or UL grant) for user terminals 20. To be more specific, the control section 401 blind-detects one or more candidate resources in a search space, and detects DCI for a user terminal 20.

Furthermore, the control section 401 controls receipt of DL data channels (for example, sPDSCHs) based on candidate resources where no DCI is detected. To be more specific, when DCI (DL assignment and/or UL grant) is detected in a candidate resource in the resource field (for example, the sPDSCH field) allocated for DL data channels, the control section 401 may judge (assume) that a DL data channel is mapped to a candidate resource where no DCI is detected, inside this resource field (first to fourth aspects).

Also, the control section 401 may judge, based on whether or not DCI (DL assignment and/or UL grant) is detected in a candidate resource in the resource field allocated for the DL data channel, whether a DL data channel is mapped to a candidate resource where no DCI is detected, inside this resource field (first judgement regarding mapping according to the fourth aspect).

Also, the control section 401 may judge, based on specifying information from the radio base station 10, whether DL data channels are mapped to candidate resources where no DCI is detected, inside the resource field allocated for DL data channels (second mapping judgment according to the fourth aspect).

Also, the control section 401 may control the received signal processing section 404 to perform DL data channel receiving processes based on judgments as to whether DL data channels are mapped to DL control channel candidate resources such as described above (first to fourth aspects).

For the control section 401, a controller, a control circuit or control apparatus that can be described based on general understanding of the technical field to which the present invention pertains can be used.

In the transmission signal generation section 402, UL signals (including UL data signals, UL control signals, UL reference signals, UCI, sTTI support information, etc.) are generated (including, for example, encoding, rate matching, puncturing, modulation, etc.) based on commands from the control section 401, and output to the mapping section 403. For the transmission signal generation section 402, a signal generator, a signal generation circuit or signal generation apparatus that can be described based on general understanding of the technical field to which the present invention pertains can be used.

The mapping section 403 maps the UL signals generated in the transmission signal generation section 402 to radio resources based on commands from the control section 401, and output the result to the transmitting/receiving sections 203. For the mapping section 403, a mapper, a mapping circuit or mapping apparatus that can be described based on general understanding of the technical field to which the present invention pertains can be used.

The received signal processing section 404 performs receiving processes (for example, demapping, demodulation, decoding, etc.) for DL signals (DL data channels, DL control channels, DL reference signals, etc.). The received signal processing section 404 outputs the information received from the radio base station 10, to the control section 401. The received signal processing section 404 outputs, for example, broadcast information, system information, high layer control information related to higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that the channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire or wireless, for example) and using these multiple pieces of apparatus.

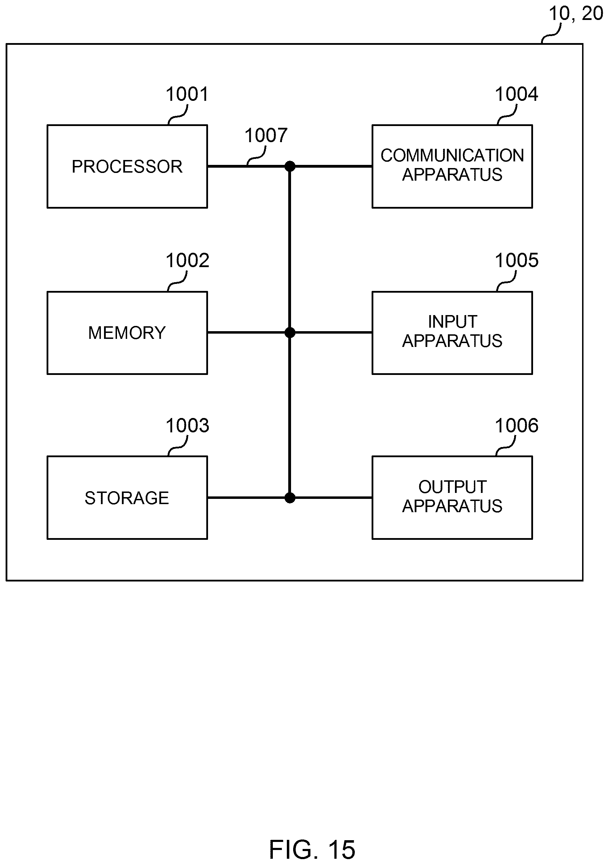

That is, a radio base station, a user terminal and so on according to an embodiment of the present invention may function as a computer that executes the processes of the radio communication method of the present invention. FIG. 15 is a diagram to show an example hardware structure of a radio base station and a user terminal according to the present embodiment. Physically, the above-described radio base stations 10 and user terminals 20 may be formed as computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawing, or may be designed not to include part of the apparatus.

For example, although only one processor 1001 is shown, a plurality of processors may be provided. Furthermore, processes may be implemented with one processor, or processes may be implemented in sequence, or in different manners, on two or more processors. Note that the processor 1001 may be implemented with one or more chips.

Each function of the radio base station 10 and user terminal 20 is implemented by allowing predetermined software (programs) to be read on hardware such as the processor 1001 and the memory 1002, and by allowing the processor 1001 to do calculations, the communication apparatus 1004 to communicate, and the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and others may be implemented by the processor 1001.

Furthermore, the processor 1001 reads programs (program codes), software modules or data, from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and/and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these types of apparatus, including the processor 1001, the memory 1002 and others, are connected by a bus 1007 for communicating information. The bus 1007 may be formed with a single bus, or may be formed with buses that vary between pieces of apparatus.

Also, the radio base station 10 and user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frame, a subframe, a slot and a symbol may be each called by other applicable names. For example, one subframe may be referred to as a "transmission time interval (TTI)," a plurality of consecutive subframes may be referred to as a "TTI," or one slot may be referred to as a "TTI." That is, a subframe and a TTI may be a subframe (1 ms) in existing LTE, may be a shorter period than 1 ms (for example, one to thirteen symbols), or may be a longer period of time than 1 ms.

Here, a TTI refers to the minimum time unit of scheduling in radio communication, for example. For example, in LTE systems, a radio base station schedules the allocation of radio resources (such as the frequency bandwidth and transmission power that can be used by each user terminal) for each user terminal in TTI units. Note that the definition of TTIs is not limited to this. TTIs may be the time unit for transmitting channel-encoded data packets (transport blocks), or may be the unit of processing in scheduling, link adaptation and so on.

A TTI having a time duration of 1 ms may be referred to as a "normal TTI (TTI in LTE Rel. 8 to 12)," a "long TTI," a "normal subframe," a "long subframe," and so on. A TTI that is shorter than a normal TTI may be referred to as a "shortened TTI," a "short TTI," a "shortened subframe," a "short subframe," and so on.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource field of one subcarrier and one symbol.

Note that the above-described structures of radio frames, subframes, slots, symbols and so on are merely examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) duration can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, wording such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes. In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method of distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in the radio frequency, microwave and optical regions (both visible and invisible).

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the scope of the present invention defined by the recitations of the claims. Consequently, the description herein is provided only for the purpose of explaining examples, and should by no means be construed to limit the present invention in any way.

## Claims

1. A terminal (20) comprising:
a receiving section (203) that receives downlink control information, DCI, that is detected in at least one of a plurality of candidate resources for a downlink, DL, control channel; and
a control section (401) that determines that a DL data channel is mapped to a candidate resource, in which the DCI is not detected out of the plurality of candidate resources, when the candidate resource is in resource blocks assigned to the DL data channel.

2. The terminal according to claim 1, wherein the resource blocks are assigned by the DCI to the DL data channel.

3. A radio communication method for a terminal (20), comprising:
receiving downlink control information, DCI, that is detected in at least one of a plurality of candidate resources for a downlink, DL, control channel; and
determining that a DL data channel is mapped to a candidate resource, in which the DCI is not detected out of the plurality of candidate resources, when the candidate resource is in resource blocks assigned to the DL data channel.

## Patentansprüche

1. Endgerät (20), umfassend:
einen Empfangsabschnitt (203), der Downlink-Steuerungsinformationen, DCI, empfängt, die in mindestens einer von einer Vielzahl von Kandidaten-Ressourcen für einen Downlink-, DL-Steuerungskanal erkannt werden; und
einen Steuerungsabschnitt (401), der bestimmt, dass ein DL-Datenkanal einer Kandidaten-Ressource zugeordnet wird, in der die DCI aus der Vielzahl von Kandidaten-Ressourcen nicht erkannt werden, wenn die Kandidaten-Ressource in Ressourcenblöcken ist, die dem DL-Datenkanal zugewiesen sind.

2. Endgerät nach Anspruch 1, wobei die Ressourcenblöcke durch die DCI dem DL-Datenkanal zugewiesen werden.

3. Funkkommunikationsverfahren für ein Endgerät (20), umfassend:
Empfangen von Downlink-Steuerungsinformationen, DCI, die in mindestens einer von einer Vielzahl von Kandidaten-Ressourcen für einen Downlink-, DL-Steuerungskanal erkannt werden; und
Bestimmen, dass ein DL-Datenkanal einer Kandidaten-Ressource zugeordnet wird, in der die DCI aus der Vielzahl von Kandidaten-Ressourcen nicht erkannt werden, wenn die Kandidaten-Ressource in Ressourcenblöcken ist, die dem DL-Datenkanal zugewiesen sind.

## Revendications

1. Terminal (20) comprenant :
une section de réception (203) qui reçoit des informations de commande de liaison descendante, DCI, qui sont détectées dans au moins l'une parmi une pluralité de ressources candidates pour un canal de commande de liaison descendante, DL; et
une section de commande (401) qui détermine qu'un canal de données DL est mappé avec une ressource candidate, dans laquelle les DCI ne sont pas détectées parmi la pluralité de ressources candidates, lorsque la ressource candidate est dans des blocs de ressources assignés au canal de données DL.

2. Terminal selon la revendication 1, dans lequel les blocs de ressources sont assignés par les DCI au canal de données DL.

3. Procédé de communication radio pour un terminal (20) comprenant :
la réception d'informations de commande de liaison descendante, DCI, qui sont détectées dans au moins l'une parmi une pluralité de ressources candidates pour un canal de commande de liaison descendante, DL; et
la détermination qu'un canal de données DL est mappé avec une ressource candidate, dans laquelle les DCI ne sont pas détectées parmi la pluralité de ressources candidates, lorsque la ressource candidate est dans des blocs de ressources assignés au canal de données DL.
